# EUROPEAN PATENT APPLICATION

(11) **EP 4 242 815 A1**
(43) Date of publication of application: **13.09.2023**
(21) Application number: 21900860.4
(22) Date of filing: 12.11.2021
(51) Int. Cl.: G06F 3/0488, G06F 1/16, H04M 1/02, G06F 11/32

(54) **ELECTRONIC DEVICE COMPRISING FLEXIBLE DISPLAY AND OPERATING METHOD THEREFOR**

(30) Priority: 04.12.2020 KR 20200168709; 11.12.2020 KR 20200173082
(71) Applicant: Samsung Electronics Co., Ltd., Suwon-si, Gyeonggi-do 16677 (KR)
(72) Inventor: KIM, Sanguk, Suwon-si Gyeonggi-do 16677 (KR); KIM, Jongdoo, Suwon-si Gyeonggi-do 16677 (KR); NA, Hyoseok, Suwon-si Gyeonggi-do 16677 (KR); PARK, Daeseung, Suwon-si Gyeonggi-do 16677 (KR); JU, Wanjae, Suwon-si Gyeonggi-do 16677 (KR)
(74) Representative: Nederlandsch Octrooibureau
(86) International application number: PCT/KR2021/016530
(87) International publication number: WO 2022/119172

(57) **Abstract**

An electronic device may include: a first housing for performing a sliding operation; a second housing fastened to the first housing and having at least one opening formed therethrough; a flexible display having an exposed area having a size changing in response to the sliding operation of the first housing; at least one sensor; a processor; and a memory operatively connected to the flexible display, the at least one sensor, and the processor and storing instructions. The instructions may be configured to cause, when executed by the processor, the electronic device to identify a first area of the flexible display by using the at least one sensor, the first area being visually exposed to the outside of the electronic device through the at least one opening, activate the first area, and receive a first user input with respect to the at least one opening to execute a preconfigured function. In addition, various embodiments identified by the specification are possible.

## Description

### [Technical Field]

Various embodiments of the disclosure relate to an electronic device including flexible display and an operating method therefor.

### [Background Art]

Electronic devices having various shapes have been developed. The shape of the electronic device may be changed by an external force (e.g., manipulation of a user, and a driving device).

The electronic device may include a physical key for controlling a function (e.g., switching on/off of power and a volume up/down) of the electronic device. The user may control the function of the electronic device by manipulating the physical key.

### [Disclosure]

### [Technical Problem]

A portion of a foldable display of an electronic device according to an embodiment, the portion being retracted into and rolled inside the electronic device, is vulnerable to an external force, and thus may be protected by a housing of the electronic device. However, since a display area of the display is covered by the housing in a state in which a flexible display is inserted into the housing, it may be difficult to utilize the display inserted into the housing.

In the case of a slidable electronic device in which one side of the electronic device is expanded or contracted, a position between components changes according to a change in a shape of the electronic device, and thus, it may be difficult to implement a physical key.

### [Technical Solution]

An electronic device according to an embodiment disclosed herein includes a first housing that slides, a second housing which is fastened to the first housing and in which at least one opening is formed, a flexible display in which a size of an exposure area is changed according to the sliding movement of the first housing, at least one sensor, a processor, and a memory operatively connected to the flexible display, the at least one sensor, and the processor and configured to store instructions, wherein when executed by the processor, the instructions allow the electronic device to identify a first area of the flexible display visually exposed to an outside of the electronic device through the at least one opening using the at least one sensor, activate the first area, and execute a preset function by receiving a first user input through the at least one opening.

Further, a method of operating an electronic device according to an embodiment disclosed herein includes identifying a first area of a flexible display visually exposed to an outside of the electronic device through at least one opening, activating the first area, and executing a preset function by receiving a first user input through the at least one opening.

Further, a computer-readable recording medium stores one or more instructions executable by at least one processor according to an embodiment disclosed herein, wherein, when executed by the at least one processor, the one or more instructions allow the at least one processor to identify a first area of a flexible display visually exposed to an outside of the electronic device through at least one opening, activate the first area, and execute a preset function by receiving a first user input through the at least one opening.

### [Advantageous Effects]

According to embodiments disclosed herein, an electronic device may replace a physical key by using at least a portion of a flexible display visually exposed through an opening of a housing as a function key.

In addition, various effects directly or indirectly identified though the present specification may be provided.

The effects obtained in various embodiments of the disclosure are not limited to the effects described above, and other effects not described will be clearly understood by those skilled in the art to which the disclosure pertains from the following description.

### [Description of Drawings]

FIG. 1 is a block diagram of an electronic device in a network environment according to various embodiments.
FIG. 2A is a view illustrating the electronic device according to various embodiments disclosed in the present specification.
FIG. 2B is a view illustrating the electronic device according to various embodiments disclosed in the present specification.
FIG. 2C is an exploded perspective view illustrating an electronic device 200 according to various embodiments disclosed in the present specification.
FIG. 3A is a view illustrating a configuration of an electronic device according to an embodiment of the disclosure.
FIG. 3B is a cross-sectional view illustrating the electronic device according to the embodiment of the disclosure.
FIG. 4 is a view illustrating the electronic device that is expanded or contracted in various directions.
FIG. 5 is a view for describing an operation of the electronic device according to the embodiment.
FIG. 6 is a side view illustrating the electronic device according to the embodiment.
FIG. 7 is a block diagram 700 of a display module 160 according to various embodiments.

In connection with the description of the drawings, the same or similar components may be designated by the same or similar reference signs.

### [Mode for Invention]

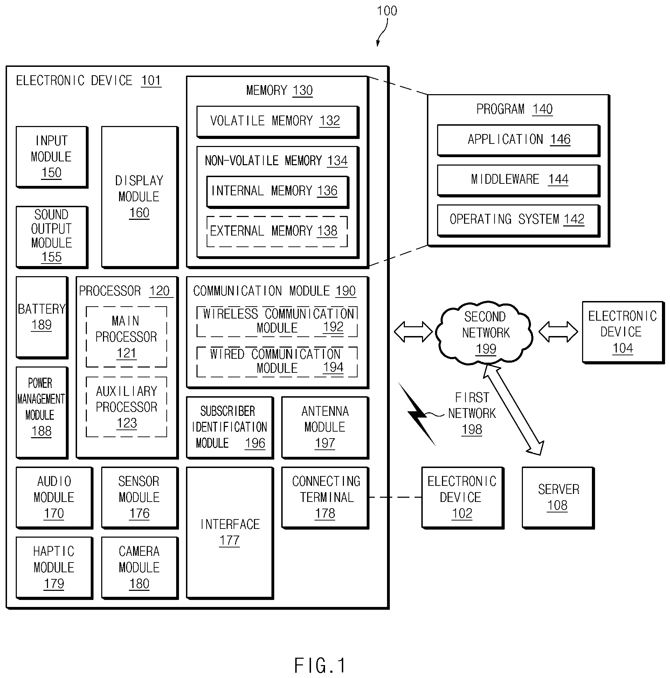

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference signs may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

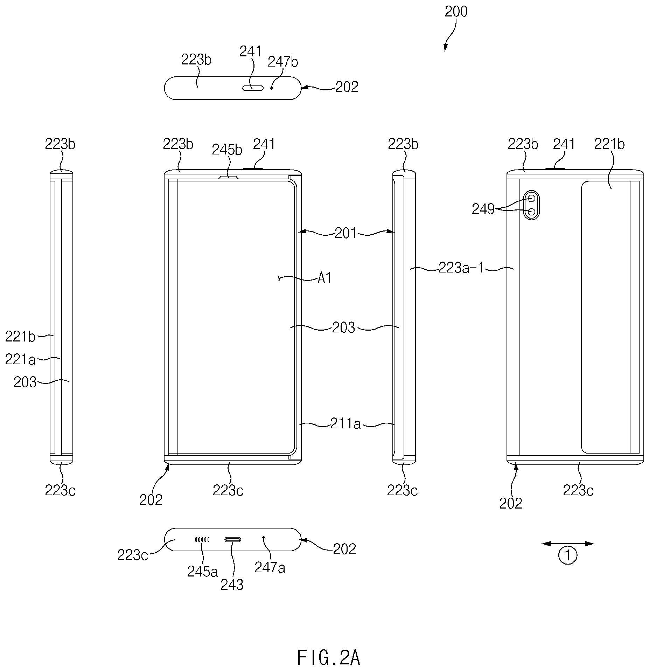

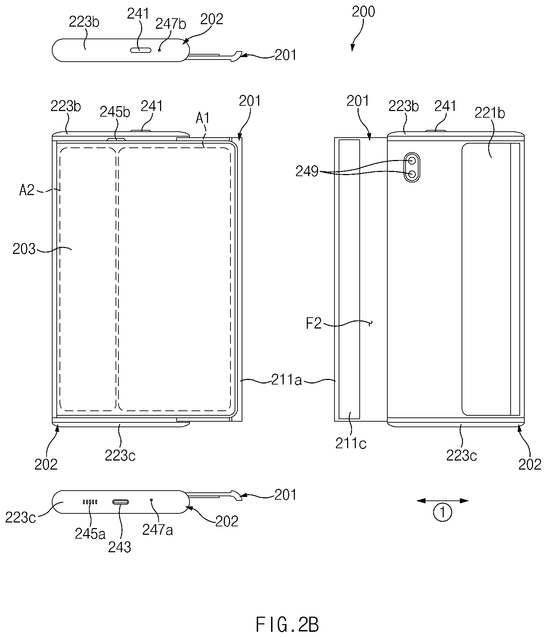

FIG. 2A is a view illustrating the electronic device according to various embodiments disclosed in the present specification. FIG. 2B is a view illustrating the electronic device according to various embodiments disclosed in the present specification.

FIG. 2A is a view illustrating a state in which a portion (e.g., a second area A2) of a flexible display 203 (e.g., the display module 106 in FIG. 1) of an electronic device 200 (e.g., the electronic device 101 in FIG. 1) is accommodated in a second structure 202. FIG. 2B is a view illustrating a state in which most part of the flexible display 203 of the electronic device 200 is exposed to the outside of the second structure 202.

The state illustrated in FIG. 2A may be defined as a state in which a first structure 201 is closed with respect to the second structure 202, and the state illustrated in FIG. 2B may be defined as a state in which the first structure 201 is open with respect to the second structure 202. According to an embodiment, the "closed state" or the "opened state" may be defined as the state in which the electronic device 200 is closed or opened.

Referring to FIGS. 2A and 2B, the electronic device 200 may include the first structure 201 and the second structure 202 movably disposed in the first structure 201. In some embodiments, the structure of the electronic device 200 may be interpreted as a structure in which the first structure 201 is slidably disposed on the second structure 202. According to an embodiment, the first structure 201 may be disposed to reciprocate by a predetermined distance in a direction illustrated with respect to the second structure 202, for example, a direction indicated by arrow ①.

According to various embodiments, the first structure 201 may be referred to as, for example, a first housing, a slide part, or a slide housing, and may be disposed to reciprocate on the second structure 202. According to an embodiment, the second structure 202 may be referred to as, for example, a second housing, a main part, and a main housing and may accommodate various electrical and electronic components such as a printed circuit board or a battery. A portion (e.g., a first area A1) of the flexible display 203 may be seated on the first structure 201. In some embodiments, the other part (e.g., the second area A2) of the flexible display 203 may be retracted into (slid into) the second structure 202 or exposed to (slid out) the outside of the second structure 202 as the first structure 201 moves (e.g., slides) relative to the second structure 202. Here, the portion (e.g., the first area A1) of the flexible display 203 may be a basic usage area in which the flexible display 203 is in a slide-in state, and the other portion (e.g., the second area A2) of the flexible display 203 may be an expansion area in which the flexible display 203 is in a slide-out state. In the embodiments illustrated in FIGS. 2A to 2C, an embodiment in which the basic usage area of the flexible display 203 in the slide-in state is seated on the first structure 201 is illustrated.

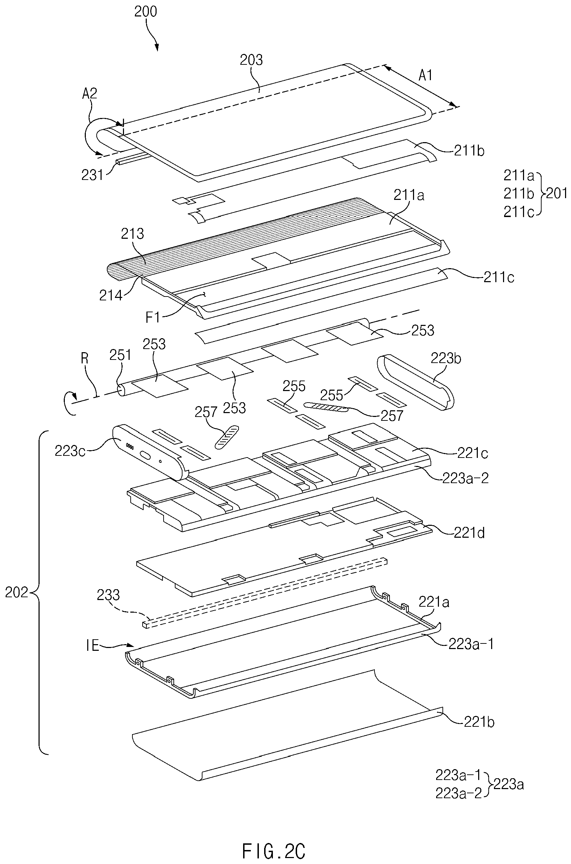

According to various embodiments, the first structure 201 may include a first plate 211a (e.g., a slide plate) and may include a first surface F1 (see FIG. 2C) including at least a portion of the first plate 211a and a second surface F2 facing a direction opposite to the first surface F1. According to an embodiment, the second structure 202 may include a second plate 221a (see FIG. 2C; e.g., a rear case), a first side wall 223a extending from the second plate 221a, a second side wall 223b extending from the first side wall 223a and the second plate 221a, a third side wall 223c extending from the first side wall 223a and the second plate 221a and being in parallel to the second side wall 223b, and/or a rear plate 221b (e.g., a rear window). In some embodiments, the second side wall 223b and the third side wall 223c may be formed perpendicular to the first side wall 223a. According to an embodiment, the second plate 221a, the first side wall 223a, the second side wall 223b, and the third side wall 223c may be formed to have one open side (e.g., a front surface) to accommodate (or surround) at least a portion of the first structure 201. For example, the first structure 201 may be coupled to the second structure 202 in an at least partially surrounded state and may slidably move in a direction parallel to the first surface F1 or the second surface F2, for example, in a direction of arrow ① while being guided by the second structure 202.

According to various embodiments, the second side wall 223b or the third side wall 223c may be omitted. According to an embodiment, the second plate 221a, the first side wall 223a, the second side wall 223b and/or the third side wall 223c may be formed as separate structures and may be then combined or assembled. The rear plate 221b may be coupled to surround at least a portion of the second plate 221a. In some embodiments, the rear plate 221b may be formed substantially integrally with the second plate 221a. According to an embodiment, the second plate 221a or the rear plate 221b may cover at least a portion of the flexible display 203. For example, the flexible display 203 may be at least partially accommodated inside the second structure 202, and the second plate 221a or the rear plate 221b may cover the portion of the flexible display 203 accommodated inside the second structure 202.

According to various embodiments, the first structure 201 may move to an open state or a closed state with respect to the second structure 202 in a first direction (e.g., a direction of arrow ①) parallel to the second plate 221a (e.g., the rear case) and the second side wall 223b, and the first structure 201 may move to be placed at a first distance from the first side wall 223a in a closed state and to be placed at a second distance greater than the first distance from the first side wall 223a in an open state. In some embodiments, in the closed state, the first structure 201 may be positioned to surround a portion of the first side wall 223a.

According to various embodiments, the electronic device 200 may include the flexible display 203, a key input device 241, a connector hole 243, audio modules 245a, 245b, 247a, and 247b, or a camera module 249. Although not illustrated, the electronic device 200 may further include an indicator (e.g., an light emitting diode (LED) device) or various sensor modules.

According to various embodiments, the flexible display 203 may include the first area A1 and the second area A2. In an embodiment, the first area A1 may substantially extend across at least a portion of the first surface F1 and may be disposed on the first surface F1. The second area A2 may extend from the first area A1 and may be inserted or accommodated inside the second structure 202 (e.g., the main housing) or exposed to the outside of the second structure 202 according to the sliding movement of the first structure 201. As will be described below, while being guided by a roller 251 (see FIG. 2C) mounted on the second structure 202, the second area A2 may move to be accommodated inside the second structure 202 or exposed to the outside. For example, while the first structure 201 slidably moves, a portion of the second area A2 may be deformed into a curved shape at a position corresponding to the roller 251.

According to various embodiments, when viewed from an upper side of the first plate 211a (e.g., a slide plate), when the first structure 201 moves from the closed state to the open state, the second area A2 is gradually exposed to the outside of the second structure 202 and thus may form a substantially flat surface together with the first area A1. The flexible display 203 may be coupled to or disposed adjacent to a touch sensing circuit, a pressure sensor capable of measuring an intensity (pressure) of a touch, and/or a digitizer that detects a magnetic field type stylus pen. In an embodiment, the second area A2 may be at least partially accommodated inside the second structure 202, and the portion of the second area A2 may be exposed to the outside even in a state (e.g., the closed state) illustrated in FIG. 2A. In some embodiments, regardless of the closed state or the open state, the exposed portion of the second area A2 may be positioned on the roller 251, and the portion of the second area A2 may maintain a curved shape at a position corresponding to the roller 251.

The key input device 241 may be disposed on the second side wall 223b or the third side wall 223 c of the second structure 202. According to outer appearance and usage conditions, the electronic device 200 may be designed such that the key input device 241 is omitted or an additional key input device(s) is included. In some embodiments, the electronic device 200 may include a key input device that is not illustrated, for example, a home key button or a touch pad disposed around the home key button. According to another embodiment, at least a portion of the key input device 241 may be positioned on one area of the first structure 201.

According to various embodiments, the connector hole 243 may be omitted according to an embodiment and may accommodate a connector (e.g., a universal serial bus (USB) connector) for transmitting and receiving power and/or data to and from an external electronic device. Although not illustrated, the electronic device 200 may include a plurality of connector holes 243, and some of the connector holes 243 may function as a connection hole for transmitting and receiving an audio signal to and from the external electronic device. In the illustrated embodiment, the connector hole 243 is disposed on the third side wall 223c, but the disclosure is not limited thereto, and the connector hole 243 or the connector hole that is not illustrated may be arranged on the first side wall 223a or the second side wall 223b.

According to various embodiments, the audio modules 245a, 245b, 247a, and 247b may include the speaker holes 245a and 245b or the microphone holes 247a and 247b. One of the speaker holes 245a and 245b may be provided as a receiver hole for voice communication, and the other one thereof may be provided as an external speaker hole. In the microphone holes 247a and 247b, a microphone for acquiring external sound may be disposed therein, and in some embodiments, a plurality of microphones may be arranged to detect a direction of the sound. In some embodiments, the speaker holes 245a and 245b and the microphone holes 247a and 247b may be implemented as a single hole or a speaker (e.g., a piezo speaker) may be included without the speaker holes 245a and 245b. According to an embodiment, the speaker hole indicated by reference sign "245b" may be disposed in the first structure 201 and used as a receiver hole for voice communication, and the speaker hole (e.g., an external speaker hole) indicated by reference sign "245a" may be disposed in the second structure 202 (e.g., on one of the side surfaces 223a, 223b, and 223c).

The camera module 249 may be provided in the second structure 202 and may photograph a subject in a direction opposite to the first area A1 of the flexible display 203. The electronic device 200 may include a plurality of camera modules 249. For example, the electronic device 200 may include a wide-angle camera, a telephoto camera, or a close-up camera and may include an infrared projector and/or an infrared receiver according to the embodiment to measure a distance to a subject. The camera module 249 may include one or a plurality of lenses, an image sensor, and/or an image signal processor. Although not illustrated, the electronic device 200 may further include a camera module (e.g., a front camera) that photographs the subject in the direction opposite to the first area A1 of the flexible display 203. For example, the front camera may be disposed around the first area A1 or in an area overlapping the flexible display 203, and when the front camera is disposed in the area overlapping the flexible display 203, the subject may be photographed through the flexible display 203.

According to various embodiments, an indicator (not illustrated) of the electronic device 200 may be disposed in the first structure 201 or the second structure 202 and may include an LED to provide state information of the electronic device 200 as a visual signal. A sensor module (not illustrated) of the electronic device 200 may generate an electric signal or a data value corresponding to an internal operation state or an external environment state of the electronic device 200. The sensor module may include, for example, a proximity sensor, a fingerprint sensor, and a biometric sensor (e.g., an iris/face recognition sensor or an heart rate monitor (HRM) sensor). In another embodiment, the sensor module may include at least one of, for example, a gesture sensor, a gyro sensor, a barometric pressure sensor, a magnetic sensor, an acceleration sensor, a grip sensor, a color sensor, an infrared (IR) sensor, a temperature sensor, a humidity sensor, or an ambient light sensor.

FIG. 2C is an exploded perspective view illustrating an electronic device 200 according to various embodiments disclosed in the present specification.

Referring to FIG. 2C, the electronic device 200 may include the first structure 201, the second structure 202 (e.g., the main housing), the flexible display 203, a guide member (e.g., the roller 251), a support sheet 253, and/or a multi-joint hinge structure 213. The portion (e.g., the second area A2) of the flexible display 203 may be accommodated inside the second structure 202 while being guided by the roller 251.

According to various embodiments, the first structure 201 may include the first plate 211a (e.g., a slide plate) and a first bracket 211b and/or a second bracket 211c mounted on the first plate 211a. The first structure 201, for example, the first plate 211a, the first bracket 211b and/or the second bracket 211c may be formed of metal material and/or non-metallic material (e.g., a polymer). The first plate 211a may be mounted on the second structure 202 (e.g., the main housing ) and linearly reciprocate in one direction (e.g., in the direction of arrow ① in FIG. 1) while being guided by the second structure 202. In an embodiment, the first bracket 211b may be coupled to the first plate 211a to form the first surface F1 of the first structure 201 together with the first plate 211a. The first area A1 of the flexible display 203 may be substantially mounted on the first surface F1 and maintained in a flat plate shape. The second bracket 211c may be coupled to the first plate 211a to form the second surface F2 of the first structure 201 together with the first plate 211a. According to an embodiment, the first bracket 211b and/or the second bracket 211c may be formed integrally with the first plate 211a. This may be appropriately designed in consideration of an assembly structure or manufacturing process of a manufactured product. The first structure 201 or the first plate 211a may be coupled to the second structure 202 and slidably move relative to the second structure 202.

According to various embodiments, the multi-joint hinge structure 213 may include a plurality of bars or rods 214 and may be connected to one end of the first structure 201. For example, as the first structure 201 slidably moves, the multi-joint hinge structure 213 may move relative to the second structure 202 and may be substantially accommodated inside the second structure 202 in the closed state (e.g., the state illustrated in FIG. 1). In some embodiments, even in the closed state, a portion of the multi-joint hinge structure 213 may not be accommodated inside the second structure 202. For example, even in the closed state, the portion of the multi-joint hinge structure 213 may be positioned to correspond to the roller 251 outside the second structure 202. The plurality of rods 214 may extend in a straight line, may be disposed in parallel to a rotary shaft "R" of the roller 251, and may be arranged in a direction perpendicular to the rotary shaft "R", for example, in a direction in which the first structure 201 slidably moves.

Accordingly, as the first structure 201 slidably moves, the plurality of rods 214 may be arranged to form a curved surface shape or arranged to form a flat shape. For example, as the first structure 201 slidably moves, the multi-joint hinge structure 213 may form a curved surface at a portion thereof facing the roller 251 and may form a flat surface at a portion thereof not facing the roller 251. In an embodiment, the second area A2 of the flexible display 203 may be mounted on or supported by the multi-joint hinge structure 213 and may be exposed to the outside of the second structure 202 together with the first area A1 in the open state (e.g., the state illustrated in FIG. 2). In the state in which the second area A2 is exposed to the outside of the second structure 202, the multi-joint hinge structure 213 may have a substantially flat surface to support or maintain the second area A2 in a flat state.

According to various embodiments, the second structure 202 (e.g., the main housing) may include the second plate 221a (e.g., the rear case), the printed circuit board (not illustrated), the rear plate 221b, a third plate 221c (e.g., a front case), and a support member 221d. The second plate 221a, for example, the rear case may be disposed to face the direction opposite to the first surface F1 of the first plate 211a and substantially provide an external shape of the second structure 202 or the electronic device 200. In an embodiment, the second structure 202 may include the first side wall 223a extending from the second plate 221a, the second side wall 223b extending from the second plate 221a and formed to be substantially perpendicular to the first side wall 223a, and the third side wall 223c extending from the second plate 221a, formed to be substantially perpendicular to the first side wall 223a, and formed to be parallel to the second side wall 223b. In the illustrated embodiment, the second side wall 223b and the third side wall 223c are manufactured as separate components from the second plate 221a and may be mounted and assembled to the second plate 221a, but may be formed integrally with the second plate 221a. An antenna for proximity wireless communication, an antenna for wireless charging, or an antenna for magnetic secure transmission (MST) may be accommodated in a space of the second structure 202 not overlapping the multi-joint hinge structure 213.

According to various embodiments, the rear plate 221b may be coupled to an outer surface of the second plate 221a, and according to an embodiment, may be manufactured integrally with the second plate 221a. In an embodiment, the second plate 221a may be made of metal or polymer material, the rear plate 221b may be made of a material such as metal, glass, synthetic resin, and ceramic, and thus a decorative effect may be provided to the exterior of the electronic device 200. According to an embodiment, the second plate 221a and/or the rear plate 221b may be made of a material that transmits light at least partially (e.g., on an auxiliary display area). For example, in a state in which the portion (e.g., the second area A2) of the flexible display 203 is accommodated inside the second structure 202, the electronic device 200 may output visual information using a partial area of the flexible display 203 accommodated inside the second structure 202. The auxiliary display area may provide, to the outside of the second structure 202, the visual information output from the accommodated area inside the second structure 202.

According to various embodiments, the third plate 221c may be made of metal or a polymer material and may be coupled to the second plate 221a (e.g., the rear case), the first side wall 223a, the second side wall 223b, and/or the third side wall 223c to form an inner space of the second structure 202. According to an embodiment, the third plate 221c may be referred to as a "front case", and the first structure 201, for example, the first plate 211a may slidably move while substantially facing the third plate 221c. In some embodiments, the first side wall 223a may be formed by a combination of a first side wall portion 223a-1 extending from the second plate 221a and a second side wall portion 223a-2 formed at one edge of the third plate 221c. In another embodiment, the first side wall portion 223a-1 may be coupled to surround the one edge of the third plate 221c, for example, the second side wall portion 223a-2, and in this case, the first side wall portion 223a-1 itself may form the first side wall 223a.

According to various embodiments, the support member 221d may be disposed in a space between the second plate 221a and the third plate 221c, may be made of metal or a polymer material, and may have a flat plate shape. The support member 221d may provide an electromagnetic shielding structure in the inner space of the second structure 202 or improve mechanical rigidity of the second structure 202. In an embodiment, when being accommodated inside the second structure 202, the partial area (e.g., the second area A2) of the multi-joint hinge structure 213 and/or the flexible display 203 may be positioned in a space between the second plate 221a and the support member 221d.

According to various embodiments, the printed circuit board that is not illustrated may be disposed in a space between the third plate 221c and the support member 221d. For example, the printed circuit board may be accommodated in a space separated by the support member 221d from a space in which the partial area of the multi-joint hinge structure 213 and/or the flexible display 203 is accommodated inside the second structure 202. A processor, a memory, and/or an interface may be mounted on the printed circuit board. The processor may include, for example, one or more of a central processing unit, an application processor, a graphic processing unit, an image signal processor, a sensor hub processor, or a communication processor.

The memory (e.g., the memory 130 in FIG. 1) may include, for example, a volatile memory or a non-volatile memory.

The interface may include, for example, a high definition multimedia interface (HDMI), a universal series bus (USB) interface, a secure digital (SD) card interface, and/or an audio interface. For example, the interface may electrically or physically connect the electronic device 200 to the external electronic device and may include the USB connector, the SD card/multimedia card (MMC) connector, or an audio connector.

According to various embodiments, the flexible display 203 is a flexible display based on an organic light emitting diode (OLED) and may be at least partially deformed into a curved shape while maintaining a substantially flat shape. In an embodiment, the first area A1 of the flexible display 203 may be mounted on or attached to the first surface F1 of the first structure 201 and thus maintained in a substantially flat shape. The second area A2 may extend from the first area A1 and may be supported by or attached to the multi-joint hinge structure 213. For example, the second area A2 may extend in a sliding direction of the first structure 201, may be accommodated inside the second structure 202 together with the multi-joint hinge structure 213, and may be at least partially deformed into a curved shape according to the deformation of the multi-joint hinge structure 213.

According to various embodiments, as the first structure 201 slidably moves on the second structure 202, an area of the flexible display 203 exposed to the outside may change. The electronic device 200 (e.g., the processor) may change an area of the flexible display 203, which is activated on the basis of the area of the flexible display 203 exposed to the outside. For example, in the open state or at an intermediate position between the closed state and the open state, the electronic device 200 may activate an area of the second structure 202 exposed to the outside among the entire area of the flexible display 203. In the closed state, the electronic device 200 may activate the first area A1 of the flexible display 203 and deactivate the second area A2. In the closed state, when there is no user input for a certain period of time (e.g., 30 seconds or two minutes), the electronic device 200 may deactivate the entire area of the flexible display 203. In some embodiments, in a state in which the entire area of the flexible display 203 is deactivated, as needed (e.g., when there is notification according to user settings or notification of missed call/message arrival), the electronic device 200 may activate the partial area of the flexible display 203 to provide the visual information through the auxiliary display area (e.g., a portion of the second plate 221a and/or the rear plate 221b made of a light-transmitting material).

According to various embodiments, in the open state (e.g., the state illustrated in FIG. 2), the entire area (e.g., the first area A1 and the second area A2) of the flexible display 203 may be substantially exposed to the outside, and the first area A1 and the second area A2 may be arranged to form a flat surface. In an embodiment, even in the open state, a portion (e.g., one end) of the second area A2 may be positioned to correspond to the roller 251, and the portion of the second area A2 corresponding to the roller 251 may be maintained in a curved surface shape. For example, in various embodiments disclosed in the present specification, even when it is stated that "in the open state, the second area A2 is disposed to form a flat surface", the portion of the second area A2 may be maintained in the curved surface shape. Similarly, even when it is stated that "in the closed state, the multi-joint hinge structure 213 and/or the second area A2 are accommodated inside the second structure 202", the portion of the multi-joint hinge structure 213 and/or the second area A2 may be positioned outside the second structure 202.

According to various embodiments, the guide member, for example, the roller 251, may be rotatably mounted on the second structure 202 at a position adjacent to one edge of the second structure 202 (e.g., the second plate 221a). For example, the roller 251 may be disposed adjacent to the edge (e.g., a portion indicated by reference sign IE) of the second plate 221a parallel to the first side wall 223a. Although reference sign is not assigned to the drawings, another side wall may extend from the edge of the second plate 221a adjacent to the roller 251, and the side wall adjacent to the roller 251 may be substantially parallel to the first side wall 223a. As described above, the side wall of the second structure 202 adjacent to the roller 251 may be made of a light-transmitting material, and the portion of the second area A2 may provide the visual information by penetrating the portion of the second structure 202 while being accommodated in the second structure 202.

According to various embodiments, one end of the roller 251 may be rotatably coupled to the second side wall 223b, and the other end thereof may be rotatably coupled to the third side wall 223c. For example, the roller 251 is mounted on the second structure 202 and thus may rotate about the rotary shaft "R" perpendicular to the sliding direction (e.g., a direction of arrow ① in FIG. 2A or 2B) of the first structure 201. The rotary shaft "R" may be substantially parallel to the first side wall 223a and may be positioned far from the first side wall 223a, for example, at one edge of the second plate 221a. In an embodiment, a gap formed between an outer circumferential surface of the roller 251 and an inner surface of the edge of the second plate 221a may form an entrance through which the multi-joint hinge structure 213 or the flexible display 203 moves into the second structure 202.

According to various embodiments, when the flexible display 203 is defined into a curved surface shape, the roller 251 may maintain a radius of curvature of the flexible display 203 to a certain extent, thereby suppressing excessive deformation of the flexible display 203. The wording "excessive deformation" may mean that the flexible display 203 has too small radius of curvature enough to damage pixels or signal lines included in the flexible display 203 and thus is deformed. For example, the flexible display 203 may be moved or deformed while being guided by the roller 251 and may be protected from the damage due to the excessive deformation. In some embodiments, the roller 251 may rotate while the multi-joint hinge structure 213 or the flexible display 203 are inserted into the second structure 202 or extracted to the outside. For example, by suppressing friction between the multi-joint hinge structure 213 (or the flexible display 203) and the second structure 202, the multi-joint hinge structure 213 (or the flexible display 203) may be smoothly inserted into/extracted from the second structure 202.

According to various embodiments, the support sheet 253 may be made of a material having flexibility and a certain degree of elasticity, for example, a material including an elastic material such as silicone or rubber, and may be selectively rolled around the roller 251 as the roller 251 rotates while being mounted on or attached to the roller 251. In the illustrated embodiment, the support sheet 253 may be arranged in a plurality of (e.g., four) support sheets 253 in a direction of the rotary shaft "R" of the roller 251. For example, the plurality of support sheets 253 may be mounted on the roller 251 at a predetermined interval from adjacent other support sheets 253 and may extend in a direction perpendicular to the rotary shaft "R". In another embodiment, one support sheet may be mounted on or attached to the roller 251. For example, the one support sheet may have a size and shape corresponding to an area in which the support sheets 253 are arranged and an area between the support sheets 253 in FIG. 2C. In this way, the number, the size, or the shape of the support sheets 253 may be appropriately changed depending on an actually manufactured product. In some embodiments, the support sheet 253 may be rolled around the outer circumferential surface of the roller 251 as the roller 251 rotates or may escape from the roller 251 to be unfolded in a flat plate shape between the flexible display 203 and the third plate 221c. In another embodiment, the support sheet 253 may be referred to as a "support belt", an "auxiliary belt", a "support film", or an "auxiliary film".

According to various embodiments, an end of the support sheet 253 may be connected to the first structure 201, for example, the first plate 211a, (e.g., a slide plate), and in the closed state (e.g., the state illustrated in FIG. 1), the support sheet 253 may be rolled around the roller 251. Thus, when the first plate 211a moves to the open state (e.g., the state illustrated in FIG. 2A), the support sheet 253 may be gradually positioned between the second structure 202 (e.g., the third plate 221c) and the flexible display 203 (e.g., the second area A2) or between the second structure 202 (e.g., the third plate 221c) and the multi-joint hinge structure 213. For example, at least a portion of the support sheet 253 may be positioned to face the multi-joint hinge structure 213, and the support sheet 253 may be selectively rolled around the roller 251 according to the sliding movement of the first plate 211a. The support sheet 253 may be generally disposed in contact with the multi-joint hinge structure 213, but the portion of the support sheet 253 rolled around the roller 251 may be substantially separated from the multi-joint hinge structure 213.

According to various embodiments, an interval (e.g., an arrangement interval "G") between a surface of the flexible display 203 and an inner surface of the edge of the second plate 221a may change according to a degree to which the support sheet 253 is rolled around the roller 251. As the arrangement interval "G" becomes smaller, it is easier to prevent inflow of foreign substances. However, when the arrangement interval "G" is too small, the flexible display 203 may be in contact with or rub against the second plate 221a. When direct contact or friction occurs, the surface of the flexible display 203 may be damaged or the sliding movement of the first structure 201 may be hindered.

According to various embodiments, in the closed state, as the support sheet 253 is rolled around the roller 251, while a state in which the surface of the flexible display 203 is not in contact with the second plate 221a is maintained, the interval between the surface of the flexible display 203 and the inner surface of the edge of the second plate 221a may be reduced. For example, in the closed state, the arrangement interval "G" is reduced so that foreign substances may be prevented from being introduced into the second structure 202. In an embodiment, as the first structure 201 (e.g., the first plate 211a or the slide plate) gradually moves to the open state, the support sheet 253 is unrolled from the roller 251 and gradually moves between the second structure 202 (e.g., the second plate 221a or the third plate 221c) and the multi-joint hinge structure 213. For example, as the first structure 201 moves to the open state, the arrangement interval "G" gradually increases, and thus direct friction or contact between the flexible display 203 and another structure (e.g., the second plate 221a) may be suppressed, and damage to the surface of the flexible display 203 due to the friction or contact may be prevented. In some embodiments, a thickness of the support sheet 253 may gradually increase as it goes from one end (e.g., a portion fixed to the roller 251) to the other end (e.g., a portion fixed to the first plate 211a). Using a thickness profile of the support sheet 253, the arrangement interval "G" in the closed state and the open state may be adjusted.

According to various embodiments, the electronic device 200 may include at least one elastic member 231 and 233 made of a low-density elastic material such as a sponge or a brush. For example, the electronic device 200 may include the first elastic member 231 mounted on one end of the flexible display 203, and according to an embodiment, may further include the second elastic member 233 mounted on the inner surface of the edge of the second plate 221a. The first elastic member 231 may be substantially disposed in the inner space of the second structure 202 and may be positioned to correspond to the edge of the second plate 221a in the open state (e.g., the state illustrated in FIG. 2A). In an embodiment, the first elastic member 231 may move in the inner space of the second structure 202 according to the sliding movement of the first structure 201. When the first structure 201 moves from the closed state to the open state, the first elastic member 231 may move toward the edge of the second plate 221a. When the first structure 201 reaches the open state, the first elastic member 231 may come into contact with the inner surface of the edge of the second plate 221a. For example, in the open state, the first elastic member 231 may seal a gap between the inner surface of the edge of the second plate 221a and the surface of the flexible display 203. In another embodiment, when the first structure 201 moves from the closed state to the open state, the first elastic member 231 may move while in contact with (e.g., sliding contact) the second plate 221a. For example, in the closed state, when foreign substances are introduced through the gap between the second area A2 and the second plate 221a, and when the first structure 201 moves to the open state, the first elastic member 231 may discharge foreign substances to the outside of the second structure 202.

According to various embodiments, the second elastic member 233 may be attached to the inner surface of the edge of the second plate 221a and may be substantially disposed to face the inner surface of the flexible display 203. In the closed state, the gap (e.g., the arrangement interval "G") between the surface of the flexible display 203 and the inner surface of the edge of the second plate 221a may be substantially determined by the second elastic member 233. According to an embodiment, in the closed state, the second elastic member 233 may be in contact with the surface of the flexible display 203 to substantially seal the arrangement interval "G". According to an embodiment, the second elastic member 233 is made of a low-density elastic member such as a sponge or a brush and thus may not damage the surface of the flexible display 203 even when the second elastic member 233 directly comes into contact with the flexible display 203. In another embodiment, as the first structure 201 gradually moves to the open state, the arrangement interval "G" may increase. For example, the flexible display 203 may gradually expose the second area A2 to the outside of the second structure 202 without substantially being in contact with or rubbing against the second elastic member 233. When the first structure 201 reaches the open state, the first elastic member 231 may come into contact with the second elastic member 233. For example, in the open state, the first elastic member 231 and the second elastic member 233 may seal the arrangement interval "G", thereby blocking the inflow of foreign substances.

According to various embodiments, the electronic device 200 may further include a guide rail(s) 255 and/or an actuating member(s) 257. The guide rail(s) 255 may be mounted on the second structure 202, for example, the third plate 221c, to guide the sliding movement of the first structure 201 (e.g., the first plate 211a or the slide plate). The actuating member(s) 257 may include a spring or spring module that provides an elastic force in a direction in which both ends thereof move away from each other. One end of the actuating member(s) 257 may be rotatably supported by the second structure 202, and the other end thereof may be rotatably supported by the first structure 201. When the first structure 201 slidably moves, both ends of the actuating member(s) 257 may be positioned closest to each other at any one point (hereinafter, referred to as a "closest point") between the closed state and the open state. For example, in a section between the closest point and the closed state, the actuating member(s) 257 may provide an elastic force to the first structure 201 in a direction moving toward the closed state, and in a section between the closest point and the open state, the actuating member(s) 257 may provide an elastic force to the first structure 201 in a direction moving toward the open state.

In the following description, the components that may be easily understood through previous embodiments are designed by the same reference signs in the drawings or omitted, and a detailed description thereof will be also omitted. The electronic device (e.g., the electronic device in FIGS. 1 to 2C) according to various embodiments disclosed in the present specification may be implemented by selectively combining components according to different embodiments, and components of one embodiment may be replaced by components of another embodiment. For example, it is noted that the disclosure is not limited to specific drawings or embodiments.

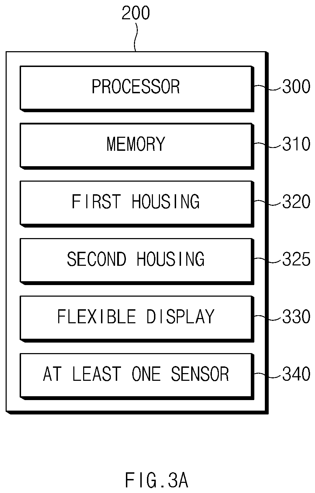

FIG. 3A is a view illustrating a configuration of an electronic device according to an embodiment of the disclosure.

According to an embodiment, the electronic device 200 (e.g., the electronic device 200 in FIG. 2A) may include a processor 300, a memory 310, a first housing 320, a second housing 325, a flexible display 330, and/or at least one sensor 340.

According to an embodiment, the processor 300, the memory 310, the flexible display 330, or the at least one sensor 340 may correspond to the processor 120, the memory 130, the display module 160, or the sensor module 176 in FIG. 1, respectively.

According to an embodiment, the first housing 320 (e.g., the first structure 201 in FIG. 2A) and the second housing 325 (e.g., the second structure 202 in FIG. 2A) may form the exterior of the electronic device 200. The components (e.g., the memory 310, the flexible display 330, and the at least one sensor 240) included in the electronic device 200 may be arranged in a space defined by the first housing 320 and the second housing 325.

According to an embodiment, the second housing 325 may serve as a fixed cover accommodating portions of the first housing 320 and the flexible display 330. According to an embodiment, the first housing 320 may serve as a sliding cover to which one side of the flexible display 330 is fixed.

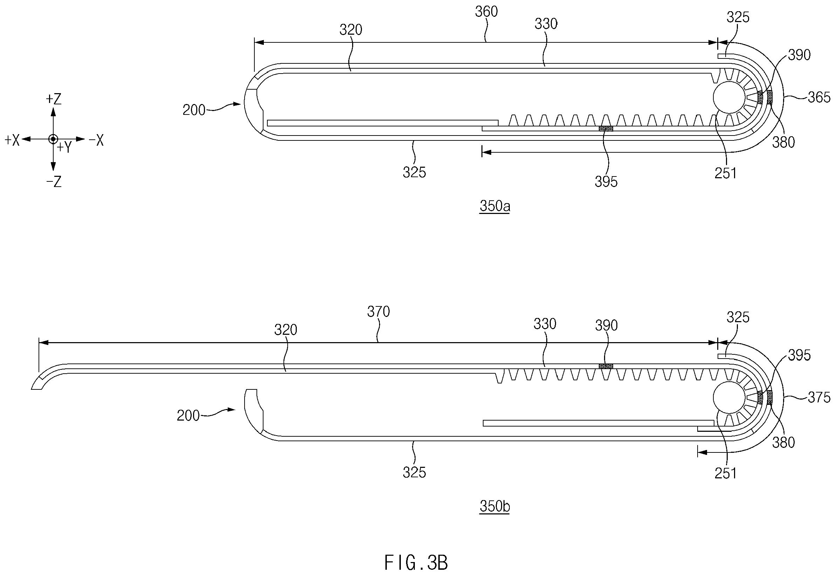

According to an embodiment, the electronic device 200 may include the first housing 320 that slides, the second housing 325 which is fastened to the first housing 320 and in which at least one opening is formed, the flexible display 330 in which the size of an exposure area is changed according to the sliding movement of the first housing 320, the at least one sensor 340, the processor 300, and the memory 310 operatively connected to the flexible display 330, the at least one sensor 340, and the processor 300 and storing instructions. When executed by the processor 300, the instructions may allow the electronic device 200 to identify a first area (e.g., see a third area 390 in FIG. 3B) of the flexible display 330 visually exposed to the outside of the electronic device 200 through at least one opening (e.g., see at least one opening 380 in FIG. 3B) using the at least one sensor 340, to activate the first area, and to execute a preset function by receiving a first user input through the at least one opening. According to an embodiment, when executed by the processor 300, the instructions may allow the electronic device 200 to detect a change in the shape of the electronic device 200 using the at least one sensor 340, to identify a second area (e.g., see a fourth area 395 in FIG. 3B) of the flexible display 330 visually exposed to the outside of the electronic device 200 through the at least one opening, to activate the second area, and to execute a preset function by receiving a second user input through the at least one opening.

According to an embodiment, when executed by the processor 300, the instructions may allow the electronic device 200 to identify a movement amount of the flexible display 330 according to the change in the shape of the electronic device 200 using the at least one sensor 340 and to identify a second area on the basis of the movement amount of the flexible display 330.

According to an embodiment, the at least one opening includes a first opening and a second opening, the first area includes a third area (e.g., a plurality of areas in FIG. 3B) corresponding to the first opening and a fourth area (e.g., a plurality of areas in FIG. 3B) corresponding to the second opening, and when executed by the processor 300, the instructions may allow the electronic device 200 to map different functions to the third area and the fourth area. According to an embodiment, the first opening and the second opening may be spaced apart from each other by a partition wall.

According to an embodiment, the preset function may include at least one of a volume control function, a power control function, and an artificial intelligence software calling function. According to an embodiment, when executed by the processor 300, the instructions may allow the electronic device 200 to display a notification through the first area. For example, the notification may include at least one of a remaining battery amount, message reception, or missed call of the electronic device 200.

According to an embodiment, when executed by the processor 300, the instructions may allow the electronic device 200 to provide a feedback in response to the first user input.

FIG. 3B is a cross-sectional view illustrating the electronic device according to the embodiment of the disclosure.

Referring to FIG. 3B, the first housing 320 may move in a first direction (e.g., a +X axis direction) or in a second direction (e.g., a -X axis direction opposite to the first direction) with respect to the second housing 325. The electronic device 200 may be disposed in a closed state 350a (e.g., the closed state in FIG. 2A) or an open state 350b (e.g., the open state in FIG. 2A) as the first housing 320 moves.

In the closed state 350a, the electronic device 200 may have a minimum size. The flexible display 330 may be divided into a (1-1)^{th} area 360 and a (1-2)^{th} area 365. The (1-1)^{th} area 360 may be an area exposed to a front surface (e.g., in a +Z direction) of the electronic device 200 among the flexible display 330.

In the open state 350b, the electronic device 200 may have a maximum size. The flexible display 330 may be divided into a (2-1)^{th} area 370 and a (2-2)^{th} area 375. The (2-1)^{th} area 370 may be an area exposed to the front surface (e.g., in the +Z direction) of the electronic device 200 among the flexible display 330. According to an embodiment, the at least one opening 380 may be formed in the second housing 325. For example, the at least one opening 380 may be formed within a specified distance from a roller (e.g., the roller 251 in FIG. 2C). As another example, the at least one opening 380 may be formed on a side surface (in the -X axis direction) of the electronic device 200.

According to an embodiment, the at least one opening 380 may be covered with a transparent reinforced glass or reinforced plastic cover to improve the visibility of a screen while protecting the flexible display 330 exposed through the opening 380.

Referring to the closed state 350a and the open state 350b, at least portions of the (1-2)^{th} area 365 and the (2-2)^{th} area 375 may be arranged to be rolled around or unrolled from an inside of at least one of the first housing 320 and the second housing 325. For example, the at least portions of the (1-2)^{th} area 365 and the (2-2)^{th} area 375 may be arranged to be bent along the roller 251.

According to an embodiment, in the closed state 350a, the third area 390 that is at least a portion of the (1-2)^{th} area 365 may be visually exposed through the opening 380 of the second housing 325. In the open state 350b, the fourth area 395 that is at least a portion of the (2-2)^{th} area 375 may be visually exposed through the opening 380 of the second housing 325. In the closed state 350a and the open state 350b, positions of the areas of the flexible display 330, which are visually exposed through the opening 380 of the second housing 325, may be different. According to an embodiment, when the opening 380 is provided as a plurality of openings 380, the third area 390 and the fourth area 395 may include a plurality of areas that are visually exposed through the plurality of openings. According to an embodiment, the (1-1)^{th} area 360 and the (2-1)^{th} area 370 may operate in an activated state. According to an embodiment, the (1-1)^{th} area 360 and the (2-1)^{th} area 370 may be turned on or off or operate in an always on display (AoD) mode on the basis of a user input. According to an embodiment, the (1-2)^{th} area 365 and the (2-2)^{th} area 375 may operate in an inactivated state. According to an embodiment, the (1-2)^{th} area 365 and the (2-2)^{th} area 375 may be turned off or operate in a low power mode.

According to an embodiment, the processor 300 may identify a position of the third area 390 or the fourth area 395 on the flexible display 330. The processor 300 may identify the position of the third area 390 or the fourth area 395 on the basis of a degree of overlap between the first housing 320 and the second housing 325, which is identified through the at least one sensor 340. The processor 300 may identify the position of the third area 390 or the fourth area 395 on the basis of a degree of movement of the second housing 325 relative to the first housing 320, which is identified through the at least one sensor 340. The processor 300 may identify the position of the third area 390 or the fourth area 395 on the basis of a degree of rotation of the roller 251, which is identified through the at least one sensor 340.

According to an embodiment, the processor 300 may identify the third area 390 or the fourth area 395 and activate the third area 390 or the fourth area 395 that is identified. According to an embodiment, the processor 300 may activate a touch sensor, a pixel, or a combination thereof of the third area 390 or the fourth area 395.

According to an embodiment, the processor 300 may display a user interface UI through the pixel of the third area 390 or the fourth area 395.

According to an embodiment, the processor 300 may receive a user input through the at least one opening 380. The user input through the at least one opening 380 may be identified through the third area 390 or the fourth area 395. For example, the processor 300 may acquire the user input as an electric signal using an activated touch sensor of the third area 390 or the fourth area 395. The acquired electric signal may include information (e.g., a position, an area, a pressure, or a time) on a touch input or a hovering input.

According to an embodiment, the processor 300 may provide a function corresponding to the user input. For example, the user input may include the touch input or a long-touch input. The processor 300 may execute different functions according to a time during which the user input is applied. As another example, the user input may be a gesture input. When a user performs a specific operation on the third area 390 or the fourth area 395, the processor 300 may recognize the user gesture using the at least one sensor 340. According to an embodiment, the function corresponding to the user input may include notification display, volume control, power control, artificial intelligence software call, or combinations thereof.

According to an embodiment, when the third area 320 or the fourth area 330 includes a plurality of areas, the processor 300 may identify the user input for each area. The processor 300 may provide a function corresponding to the user input for each area. The processor 300 may map different functions to each area.

The state (the closed state 350a and the open state 350b) of the electronic device 200 illustrated in FIG. 3B is illustrative, and the state of the electronic device 200 may be an intermediate state between the closed state 350a and the open state 350b according to a degree of sliding. When the electronic device 200 is in the intermediate state, the processor 300 may identify an area visually exposed through the opening 380 of the second housing 325 among the flexible display 330 according to a degree of movement of the first housing 320 relative to the second hosing 325. In this case, the area visually exposed through the opening 380 of the second housing 325 may be an area positioned between the third area 390 and the fourth area 395.

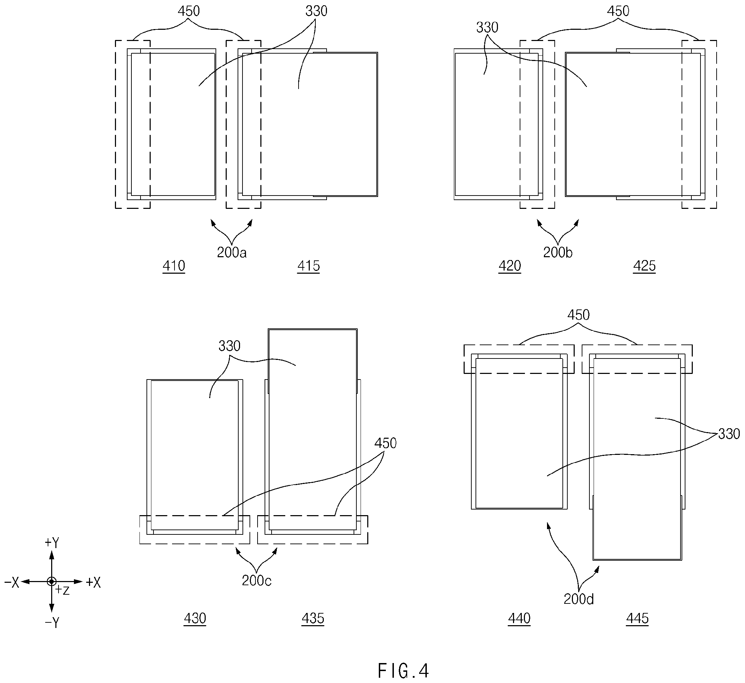

FIG. 4 is a view illustrating the electronic device that is expanded or contracted in various directions.

According to various embodiments, shapes of electronic devices 200a, 200b, 200c, and 200d (e.g., the electronic device 200 in FIG. 3A) may change according to a sliding operation of the first housing (e.g., the first housing 320 in FIG. 3A). For example, the electronic devices 200a, 200b, 200c, and 200d may be expanded or contracted in a sliding direction of the first housing 320. According to an embodiment, when the first housing 320 slides, the flexible display 330 may move in a rotational direction of a roller (e.g., the roller 251 in FIG. 2C). The roller 251 may be provided on one side 450 of each of the electronic devices 200a, 200b, 200c, and 200d. For example, the flexible display 330 may be rolled into the one side 450 or unrolled from the one side 450.

According to an embodiment, the first housing 320 of the electronic device 200a may slide along an X axis. A closed state 410 of the electronic device 200a illustrates a form in which the first housing 320 slides in the -X axis direction so that the electronic device 200a is reduced to a minimum size. According to an embodiment, when the electronic device 200a has the closed state 410, the size of an area visually exposed to a front surface (in a +Z axis direction) of the electronic device 200 among the flexible display (e.g., the flexible display 330 in FIG. 3A) may be minimal. An open state 415 of the electronic device 200a illustrates a form in which the first housing 320 slides in the +X axis direction so that the electronic device 200a is expanded to a maximum size. According to an embodiment, when the electronic device 200a is in the open state 415, the size of the exposed area may be maximal.

According to an embodiment, the first housing 320 of the electronic device 200b may slide along the X axis. A closed state 420 of the electronic device 200b illustrates a form in which the first housing 320 slides in the +X axis direction so that the electronic device 200b is reduced to a minimum size. According to an embodiment, when the electronic device 200b is in the closed state 420, the size of the exposed area may be minimal. An open state 425 of the electronic device 200b illustrates a form in which the first housing 320 slides in the -X axis direction so that the electronic device 200b is expanded to a maximum size. According to an embodiment, when the electronic device 200b is in the open state 425, the size of the exposed area may be maximal.

According to an embodiment, the first housing 320 of the electronic device 200c may slide along an Y axis. A closed state 430 of the electronic device 200c illustrates a form in which the first housing 320 slides in a -Y axis direction so that the electronic device 200c is reduced to a minimum size. According to an embodiment, when the electronic device 200c is in the closed state 430, the size of the exposed area may be minimal. An open state 435 of the electronic device 200c illustrates a form in which the first housing 320 slides in a +Y axis direction so that the electronic device 200c is expanded to a maximum size. According to an embodiment, when the electronic device 200c is in the open state 435, the size of the exposed area may be maximal.

According to an embodiment, the first housing 320 of the electronic device 200d may slide along the Y axis. A closed state 440 of the electronic device 200d illustrates a form in which the first housing 320 slides in the +Y axis direction so that the electronic device 200d is reduced to a minimum size. According to an embodiment, when the electronic device 200d is in the closed state 440, the size of the exposed area may be minimal. An open state 445 of the electronic device 200d illustrates a form in which the first housing 320 slides in the -Y axis direction so that the electronic device 200d is expanded to a maximum size. According to an embodiment, when the electronic device 200d is in the open state 445, the size of the exposed area may be maximal.

FIG. 4 illustrates a case in which the electronic devices 200a, 200b, 200c, and 200d have the minimum sizes and the maximum sizes, but the electronic devices 200a, 200b, 200c, and 200d may have intermediate forms between the closed states 410, 420, 430, and 440 and the open states 415, 425, 435, and 445 according to the degree of sliding.

The changes in the shapes of the electronic devices 200a, 200b, 200c, and 200d illustrated in FIG. 4 are merely illustrative, and embodiments of the present specification are not limited thereto. According to an embodiment, the electronic device may be expanded or contracted in at least two directions (e.g., the +X axis and the -X axis or the +Y axis and the -Y axis).

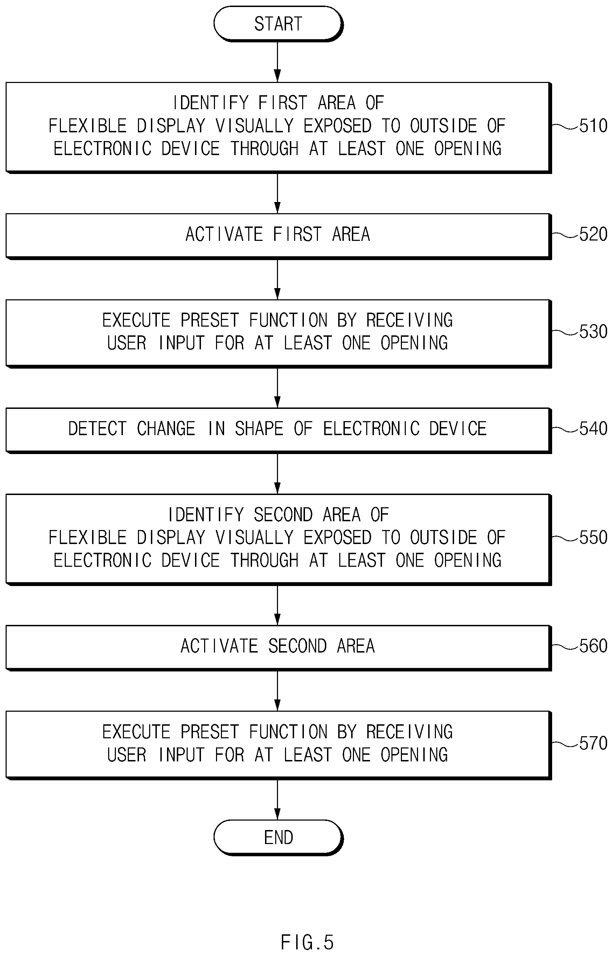

FIG. 5 is a view for describing an operation of the electronic device according to the embodiment.

In operation 510, the processor 300 may identify the first area (e.g., the third area 390 in FIG. 3B) of the flexible display 330 visually exposed to the outside of the electronic device (e.g., the electronic device 200 in FIG. 3A) through at least one opening (e.g., the at least one opening 380 in FIG. 3B). According to an embodiment, the at least one opening may be formed in the second housing 325. According to an embodiment, the at least one opening may be formed in a side surface (e.g., in the -X axis direction of FIG. 4) of the electronic device 200.

In operation 520, the processor 300 may activate the first area. According to an embodiment, the processor 300 may activate a touch sensor, a pixel, or a combination thereof of the first area.

In operation 530, the processor 300 may execute a preset function by receiving the user input through the at least one opening. The user input through the at least one opening may also be understood as a user input for the first area. According to an embodiment, the received user input may be acquired as an electric signal through the activated touch sensor in the first area. The acquired electric signal may include information (e.g., a position, an area, a pressure, or a time) on the touch input or the hovering input.

According to an embodiment, the preset function may include notification display, volume control, power control, artificial intelligence software call, or combinations thereof.

According to an embodiment, when the at least one opening is provided as a plurality of openings, the first area may include a plurality of areas visually exposed through the plurality of openings, respectively. The processor 300 may identify a user input for each of the plurality of areas and provide a function corresponding to the identified user input. In this case, the processor 300 may map different functions to the plurality of areas, respectively. For example, the processor 300 may identify the user input for one of the plurality of areas to increase a volume of the electronic device 200 and may receive the user input for one of the plurality of areas to decrease the volume of the electronic device 200.

In operation 540, the processor 300 may detect a change in the shape of the electronic device 200. According to an embodiment, the processor 300 may detect a sliding operation of the first housing 320 (e.g., the first housing 320 in FIG. 3A) using the at least one sensor 240. According to an embodiment, the processor 300 may detect the movement of the flexible display 330 according to the sliding operation of the first housing 320 using the at least one sensor 240.

In operation 550, the processor 300 may identify the second area (e.g., the fourth area 395 in FIG. 3B) of the flexible display 330 visually exposed to the outside of the electronic device 200 through the at least one opening. According to an embodiment, the processor 300 may identify a position of the second area on the basis of the degree of overlap between the first housing 320 and the second housing 325, which is identified through the at least one sensor 240. The processor 300 may identify the position of the second area on the basis of a degree of movement of the first housing 320 relative to the second housing 325, which is identified through the at least one sensor 240. The processor 300 may identify the position of the second area on the basis of the degree of rotation of the roller (e.g., the roller 251 in FIG. 2C), which is identified through the at least one sensor 240.

In operation 560, the processor may activate the second area. The second area may be different from the first area. According to an embodiment, the processor 300 may activate a touch sensor, a pixel, or a combination thereof of the second area.

In operation 570, the processor 300 may execute a preset function by receiving the user input through the at least one opening. The preset function executed in operation 570 may be the same as the preset function executed in operation 530.

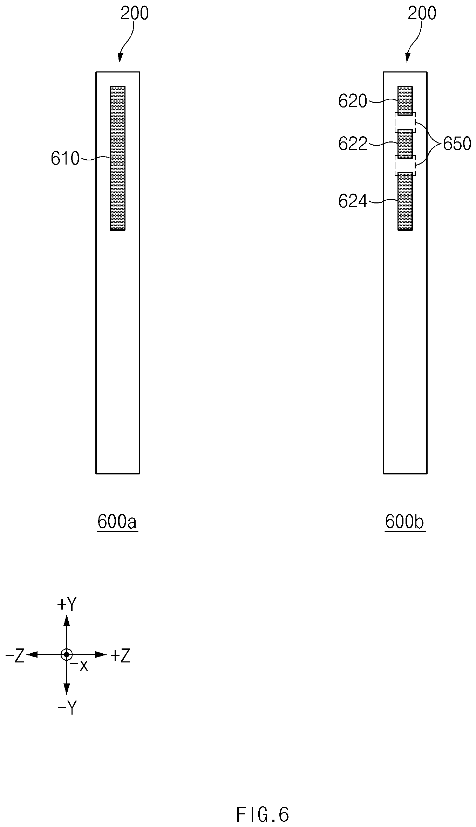

FIG. 6 is a side view illustrating the electronic device according to the embodiment.

An electronic device (e.g., the electronic device 200 in FIG. 3A) of reference signs 600a and 600b illustrates a side surface (-X axis direction) of the electronic device 200 of FIG. 3B. Reference sign 600a illustrates a case in which there is one opening of the electronic device 200. Reference sign 600b illustrates a case in which there are a plurality of openings of the electronic device 200.

According to an embodiment, in reference sign 600a, an opening 610 may be formed in a side surface of the electronic device 200. A processor (e.g., the processor 300 in FIG. 3A) may provide a preset function through the opening 610. For example, the processor 300 may provide a notification through the opening 610. The notification may be displayed on one area (e.g., the first area or the second area in FIG. 5) of a flexible display (e.g., the flexible display 330) corresponding to the opening 610. The notification may include, for example, information on the remaining battery amount, the message reception, and/or the missed call. The description of the notification is illustrative, and the processor 300 may further display an additional notification through the opening 610.

According to an embodiment, in reference sign 600b, the plurality of openings may be formed in the side surface of the electronic device 200. The plurality of openings may include a first opening 620, a second opening 622, and a third opening 624. The processor 300 may provide a preset function through the plurality of openings. The plurality of openings may provide different functions. For example, the processor 300 may receive a user input through the first opening 620 to increase the volume of the electronic device 200. For example, the processor 300 may receive a user input through the second opening 622 to decrease the volume of the electronic device 200. For example, the processor 300 may receive a user input through the third opening 624 to call artificial intelligence software stored in a memory (e.g., the memory 310 in FIG. 3A). The description of the preset function is illustrative, and the processor 300 may provide an additional function through the plurality of openings. For example, the processor 300 may receive the user input through the third opening 624 to provide a function related to power control.

The description of the preset function of FIG. 6 is illustrative, and the embodiments of the present specification are not limited thereto. According to an embodiment, the electronic device 200 of reference sign 600a may also receive a user input through the opening 610 to provide a function related to the power control. According to an embodiment, the electronic device 200 of reference sign 600b may also provide a notification through the first opening 620, the second opening 622, and/or the third opening 624.

According to an embodiment, a partition wall 650 (e.g., a protrusion) may be formed between the first opening 620 and the second opening 622 or between the second opening 622 and/or the third opening 624. A user may distinguish the plurality of opening areas (e.g., the first opening 620, the second opening 622, and/or the third opening 624) without directly viewing the electronic device 200 through the partition wall 650. According to an embodiment, a protrusion may be formed around the opening 610, the first opening 620, the second opening 622 and/or the third opening 624. For example, the opening 610, the first opening 620, the second opening 622, and/or the third opening 624 may be surrounded by the protrusion.

According to an embodiment, the processor 300 may provide feedback in response to the user input through the at least one opening. For example, the processor 300 may vibrate the electronic device 200 using a vibration motor for a specified period of time (e.g., 0.5 seconds).

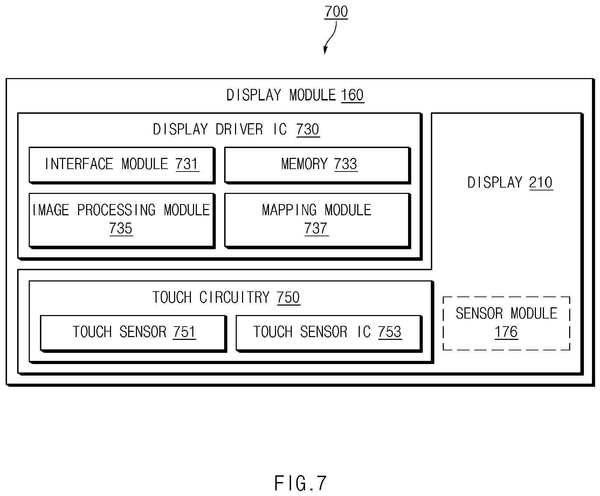

FIG. 7 is a block diagram 700 of the display module 160 according to various embodiments.

Referring to FIG. 7, the display module 160 may include a display 710 (e.g., the flexible display 330 in FIG. 3A) and a display driver integrated circuit (DDI) 730 for controlling the display 710. The DDI 730 may include an interface module 731, a memory 733 (e.g., a buffer memory ), an image processing module 735, or a mapping module 737. The DDI 730 may receive image information including, for example, image data or an image control signal corresponding to a command for controlling the image data from another component of the electronic device (e.g., the electronic device 200 in FIG. 3A) through the interface module 731. For example, according to an embodiment, the image information may be received from the processor 120 (e.g., a main processor 121)(e.g., an application processor) or an auxiliary processor 123 (e.g., a graphic processing unit) that operates independently of a function of the main processor 121. The DDI 730 may communicate with a touch circuit 750 or the sensor module 176 (e.g., the at least one sensor 340 in FIG. 3A) through the interface module 731. Further, the DDI 730 may store at least a portion of the received image information in the memory 733, for example, in units of frames. The image processing module 735 may, for example, pre-process or post-process (e.g., adjust a resolution, a brightness, or a size) at least a portion of the image data on the basis of characteristics of the image data or characteristics of the display 710. The mapping module 737 may generate a voltage value or a current value corresponding to the image data preprocessed or post-processed through the image processing module 735. According to an embodiment, the voltage value or the current value may be generated at least partially on the basis of, for example, properties of pixels of the display 710 (e.g., arrangement (RGB stripe or pentile structure) of the pixels or sizes of sub-pixels). At least some pixels of the display 710 are driven at least partially on the basis of the voltage value or the current value, and thus visual information (e.g., a text, an image, or an icon) corresponding to the image data may be displayed through the display 710.

According to an embodiment, the display module 160 may further include the touch circuit 750. The touch circuit 750 may include a touch sensor 751 and a touch sensor IC 753 for controlling the touch sensor 751. The touch sensor IC 753 may control the touch sensor 751 to detect, for example, a touch input or a hovering input for a specific position of the display 710. For example, the touch sensor IC 753 may detect the touch input or the hovering input by measuring a change in a signal (e.g., a voltage, a light quantity, a resistance, or a charge amount) for the specific position of the display 710. The touch sensor IC 753 may provide information (e.g., a position, an area, a pressure, or a time) on the detected touch input or the detected hovering input to the processor 120. According to an embodiment, at least a portion (e.g., the touch sensor IC 753) of the touch circuit 750 may be included as a portion of the display driver IC 730 or the display 710 or as a portion of another component (e.g., the auxiliary processor 123) disposed outside the display module 160.

According to an embodiment, the display module 160 may further include at least one sensor (e.g., a fingerprint sensor, an iris sensor, a pressure sensor, or an illumination sensor) of the sensor module 176 or a control circuit for the sensor module 176. In this case, the at least one sensor or the control circuit therefor may be embedded in a portion (e.g., the display 710 or the DDI 730) of the display module 160 or a portion of the touch circuit 750. For example, when the sensor module 176 embedded in the display module 160 includes a biometric sensor (e.g., the fingerprint sensor), the biometric sensor may acquire biometric information (e.g., a fingerprint image) related to the touch input through a partial area of the display 710. As another example, when the sensor module 176 embedded in the display module 160 includes a pressure sensor, the pressure sensor may acquire pressure information related to a touch input through a portion or the entirety of the display 170. According to an embodiment, the touch sensor 751 or the sensor module 176 may be disposed between pixels of a pixel layer of the display 710 or above or below the pixel layer.

## Claims

1. An electronic device comprising:
a first housing configured to slide;
a second housing which is fastened to the first housing and in which at least one opening is formed;
a flexible display in which a size of an exposure area is changed according to a sliding movement of the first housing;
at least one sensor;
a processor; and
a memory operatively connected to the flexible display, the at least one sensor, and the processor and configured to store instructions,
wherein when executed by the processor, the instructions allow the electronic device to:
identify a first area of the flexible display by using the at least one sensor (340), the first area being visually exposed to an outside of the electronic device through the at least one opening;
activate the first area; and
execute a preset function by receiving a first user input through the at least one opening.

2. The electronic device of claim 1, wherein, when executed by the processor, the instructions allow the electronic device to:
detect a change in a shape of the electronic device using the at least one sensor;
identify a second area of the flexible display visually exposed to the outside of the electronic device through the at least one opening;
activate the second area; and
execute the preset function by receiving a second user input through the at least one opening.

3. The electronic device of claim 2, wherein, when executed by the processor, the instructions allow the electronic device to:
identify a movement amount of the flexible display according to the change in the shape of the electronic device using the at least one sensor; and
identify the second area on the basis of the movement amount of the flexible display.

4. The electronic device of claim 1, wherein the at least one opening includes a first opening and a second opening,
the first area includes a third area corresponding to the first opening and a fourth area corresponding to the second opening, and
when executed by the processor, the instructions allow the electronic device to map different functions to the third area and the fourth area.

5. The electronic device of claim 4, wherein the first opening and the second opening are spaced apart from each other by a partition wall.

6. The electronic device of claim 1, wherein the preset function includes at least one of a volume control function, a power control function, and an artificial intelligence software calling function.

7. The electronic device of claim 1, wherein, when executed by the processor, the instructions allow the electronic device to display a notification through the first area.

8. The electronic device of claim 7, wherein the notification includes at least one of a remaining battery amount, message reception, or missed call of the electronic device.

9. The electronic device of claim 1, wherein, when executed by the processor, the instructions allow the electronic device to provide feedback in response to the first user input.

10. A method of operating a slidable electronic device, the method comprising:
identifying a first area of a flexible display visually exposed to an outside of the electronic device through at least one opening;
activating the first area; and
executing a preset function by receiving a first user input through the at least one opening.

11. The method of claim 10, further comprising:
detecting a change in a shape of the electronic device;
identifying a second area of the flexible display visually exposed to the outside of the electronic device through the at least one opening;
activating the second area; and
executing the preset function by receiving a second user input through the at least one opening.

12. The method of claim 11, further comprising:
identifying a movement amount of the flexible display according to the change in the shape of the electronic device; and
identifying the second area on the basis of the movement amount of the flexible display.

13. The method of claim 10, wherein the at least one opening includes a first opening and a second opening,
wherein the first area includes a third area corresponding to the first opening and a fourth area corresponding to the second opening, and
wherein the method further includes mapping different functions to the third area and the fourth area.

14. The method of claim 13, wherein the first opening and the second opening are spaced apart from each other by a partition wall.

15. The method of claim 13, wherein the preset function includes at least one of a volume control function, a power control function, and an artificial intelligence software calling function.
